Europäisches Patentamt

(19) European Patent Office

Office européen des brevets

(11) Veröffentlichungsnummer: **0 071 611**
**B1**

(12) **EUROPÄISCHE PATENTSCHRIFT**

(45) Veröffentlichungstag der Patentschrift:
**21.11.84**

(21) Anmeldenummer: **82900184.1**

(22) Anmeldetag: **29.12.81**

(86) Internationale Anmeldenummer:
**PCT/AT 81/00033**

(87) Internationale Veröffentlichungsnummer:
**WO 82/02827 (02.09.82** Gazette **82/21)**

(51) Int. Cl.³: **A 61 C 3/02**

(54) **DIAMANTSCHLEIFKÖRPER.**

(30) Priorität: **17.02.81 AT 730/81**

(43) Veröffentlichungstag der Anmeldung:
**16.02.83 Patentblatt 83/7.**

(45) Bekanntmachung des Hinweises auf die Patenterteilung:
**21.11.84 Patentblatt 84/47**

(84) Benannte Vertragsstaaten:
**CH DE FR GB LI LU NL SE**

(56) Entgegenhaltungen:
**EP - A - 0 025 645**
**DE - B - 1 209 243**
**DE - C - 584 315**
**GB - A - 732 124**
**US - A - 1 358 432**
**US - A - 2 020 117**
**US - A - 4 058 898**

(73) Patentinhaber: **DENDIA-WERK DR. ING. HANS O.
SCHEID GESELLSCHAFT M.B.H., Lindengasse 26,
A-1071 Wien (AT)**

(72) Erfinder: **PLISCHKA, Gerhard, Eckertstrasse 113,
A-8020 Graz (AT)**

(74) Vertreter: **Krause, Herbert C.E., Dipl.-Ing. et al,
Gluckgasse 1, A-1010 Wien (AT)**

**Beschreibung**

Die Erfindung betrifft einen Diamantschleifkörper für dentalmedizinische Zwecke mit einer mit Diamanten besetzten Oberfläche, die eine zylindrische oder kegelige Grundform aufweist. Solche Diamantschleifkörper finden in der Zahnmedizin und Zahntechnik Verwendung. Es werden Diamantschleifkörper verschiedenster Formen, wie z. B. in Kugel-, oder Walzen- und Rädchenformen mit zentrischer gleichmäßiger Oberfläche verwendet. Darüber hinaus sind bereits Kombinationsformen wie Walzen mit kugelförmiger Kuppe, Birnenformen oder Konus mit Spitzkuppelspitze bekannt. Seit mehreren Jahren werden bereits gelochte Scheiben verwendet, was als erster Schritt in Richtung einer besseren Kühlung der bearbeiteten Oberflächen anzusehen war.

Ein anderer bekannter, bsonders für die Knochenbearbeitung bestimmter Diamantschleifkörper ist länglich-konisch-spitz und hat an der diamantierten Oberfläche drei leicht rechtsläufig gewundene Furchen, welche für bessere Kühlung und vor allem für einen besseren Abtransport des Schleifgutes aus dem Knochenspalt sorgen. Diese Knochenfräsen werden jedoch nicht mit hohen Tourenzahlen (etwa über 100 000 r. p. m.), wie sie für Zahnsubstanzbearbeitung üblich sind, betrieben.

Mit anderen bekannten gerillten, walzenförmigen Diamantinstrumenten sollen in die abzutragende Zahnsubstanz Furchen geschliffen werden, die dann mit einem alt-konventionellen Diamantinstrument eingeebnet werden müssen.

Die DE-C-584 315 zeigt ein Schleifwerkzeug für zahnärztliche Zwecke, dessen schleifende Flächen durch besondere Flächen, die nicht mit Schleifmaterial belegt sind und in axialer Richtung des Werkzeuges von dessen einem bis zum anderen Rand durchgehend angeordnet sind, unterbrochen sind. Die belagfreien Flächen sind von beliebiger Form, und zwar vorwiegend krummlinig aber auch geradlinig, in axialer Richtung ausgeführt. Diese Schleifwerkzeuge weisen glatte Grundkörper auf, auf die unter Auslassung kleiner Flächen Schleifmaterial aufgebracht wurde. Dies führt zu einer feinen, etwa der Höhe der Körnung entsprechenden Abstufung. Es zeigt sich bei diesem Werkzeug keine Rille bzw. Nut oder Furche, die in das Grundmaterial eingebracht ist. Schleifstaub kann somit nur in radialer Richtung von dem rotierenden Werkzeug weggeschleudert werden. Ein einem solchen Werkzeug zugeleitetes Kühlmittel würde zerstäubt statt über die Mantelfläche des Werkzeuges geleitet zu werden. Dies führt bei hohen Drehzahlen zu einer übermäßigen Erwärmung des Schleifwerkzeuges und des derart behandelten Zahnes, was sehr schmerzhafte Auswirkungen haben kann.

Aufgabe der Erfindung ist es, einen Diamantschleifkörper der eingangs erwähnten Art so auszubilden, daß auch bei hoher Leistung eine gute Wärmeableitung und ein leichter Abtransport des abgeschliffenen Gutes durch Spülung erfolgen kann. Außerdem soll die bearbeitete Oberfläche keine groben Rillen aufweisen.

Die Erfindung löst diese Aufgabe dadurch, daß die wirksame Oberfläche durch einen zusammenhängenden, die zylindrische oder kegelige Grundform in ihrer ganzen Länge linksumlaufenden, schraubenwendelförmigen Streifen, der von einer gleichlaufenden Furche begrenzt ist und zumindest einen vollen Umlauf von 360° beschreibt, gebildet ist. Durch diesen linksgängigen schraubenförmigen Streifen am erfindungsgemäßen Diamanschleifkörper ergeben sich viele Vorteile: Die wirksame Schleifkörperoberfläche des Instrumentes gewährleistet durch ihre linksläufige Form einen ständigen Wechsel der Kontaktzonen, sowie freie Wärmeableitung und Schleifgutabtransport durch rasch alternierende Spülung. Ferner ergibt die Bearbeitung der betreffenden Oberfläche keine Rillen, sondern eine nichtgewellte Form bei gleichmäßigem Vorschub, wodurch eine Nachpräparation — abgesehen von der üblichen, durch das Diamantkorn verursachte Rauhtiefe — entfällt. Die relativ kleine im Schleifkontakt befindliche Oberfläche benötigt nur einen geringen Andruck für eine optimale Schleifleistung. Außerdem weist das erfindungsgemäße Instrument keine leicht abnützbaren und hochbelasteten Schleifkörperkanten mehr auf und zeigt eine verminderte Schwingungstendenz.

Die erfindungsgemäße linksgängige Modulgewindestreifenform fördert überdies während des Einsatzes auf unzugänglichen Stellen die Verteilung der erforderlichen Kühlflüssigkeit (Spray) bis zur Spitze des Instrumentes bei rechtsdrehender Maschine.

Durch den Linksdrall der streifenförmigen Schleiffläche wird bei den üblicherweise rechtsläufigen Maschinen das erfindungsgemäße Diamantinstrument während des Schleifvorgangs in das Spannfutter gedrückt, wodurch ein Herauswandern aus dem Spannfutter auch bei verminderter Haltekraft desselben erschwert ist.

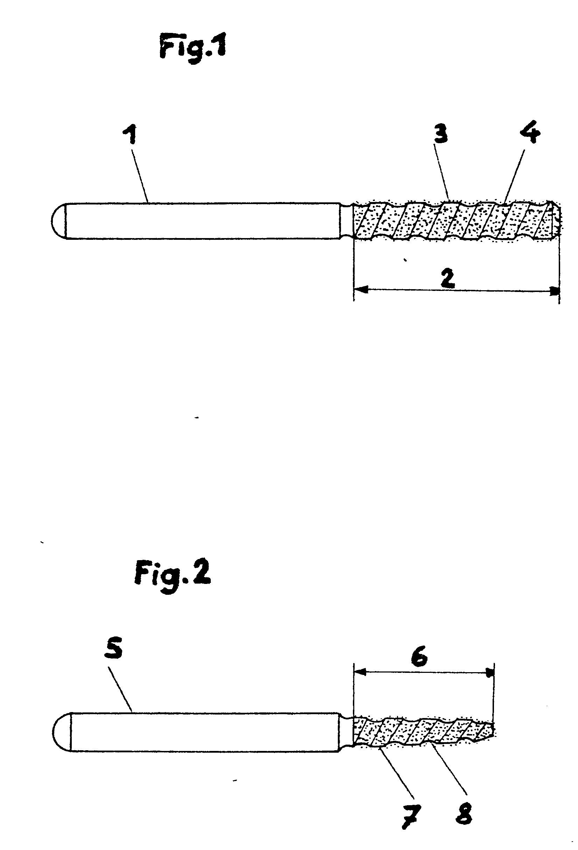

Die Erfindung ist in der Zeichnung anhand zweier Ausführungsbeispiele näher veranschaulicht. Es zeigen Fig. 1 und 2 einen zylindrischen und einen kegeligen Diamantschleifkörper in Ansicht.

Der aus NIRO-Stahl bestehende zylindrische Diamantschleifkörper 1 gemäß Fig. 1 weist an seiner wirksamen Oberfläche 2 einen linksgängigen Streifen 3 und eine Furche 4 mit geringerem Durchmesser auf. Letztere kann so breit sein wie der Streifen 3.

Gemäß Fig. 2 ist der erfindungsgemäße Schleifkörper 5 an seiner wirksamen Oberfläche 6 ebenfalls mit einem linksgewindegängigen Streifen 7 und der Furche 8 ausgestattet. Infolge der Kegelform des Abschnittes mit der Oberfläche 6 verläuft der Streifen spiralförmig, so daß die Durchmesser der Streifenteile zur Spitze hin jeweils kleiner sind als die davorliegenden Teile.

**Patentanspruch**

Diamantschleifkörper (1, 5) für dentalmedizinische Zwecke mit einer mit Diamanten besetzten wirksamen Oberfläche (2, 6), die eine zylindrische oder kegelige Grundform aufweist, dadurch gekennzeichnet, daß die wirksame Oberfläche (2, 6) durch einen zusammenhängenden, die zylindrische oder kegelige Grundform in ihrer ganzen Länge linksumlaufenden, schraubenwendelförmigen Streifen (3, 7), der von einer gleichlaufenden Furche (4, 8) begrenzt ist und zumindest einen vollen Umlauf von 360° beschreibt, gebildet ist.

**Claim**

Grinding body set with diamonds (1, 5) for dental medical purposes having a working surface (2, 6) set with diamonds, which has a cylindrical or conical basic shape, characterised in that the working surface (2, 6) is constituted by a continuous helically shaped strip (3, 7) which runs left-handedly for its whole length over the cylindrical or conical basic shape, which is limited by an evenly running groove (4, 8) and which describes at least one complete revolution of 360°.

**Revendication**

Elément abrasif diamanté (1, 5) pour usages de médecine dentaire, présentant une surface active (2, 6) incrustée de diamants qui présente une forme fondamentale cylindrique ou conique, caractérisé par le fait que la surface active (2, 6) est formée par une bande hélicoïdale d'un seul tenant (3, 7) entourant la forme fondamentale cylindrique ou conique sur toute sa longueur avec pas à gauche et qui est limitée par un sillon de même allure (4, 8) et décrit au moins un tour complet de 360°.

## Fig.1

## Fig.2

5